# EUROPÄISCHE PATENTSCHRIFT

(11) **EP 0 426 648 B1**
(45) Veröffentlichungstag und Bekanntmachung des Hinweises auf die Patenterteilung: **01.06.1994**
(21) Anmeldenummer: 90890270.3
(22) Anmeldetag: 09.10.1990
(51) Int. Cl.: B60J 5/04

(54) **Fahrzeugtür für Personenkraftwagen**
Vehicle door for motor-car
Porte pour voiture automobile

(30) Priorität: 02.11.1989 AT 2527/89
(43) Veröffentlichungstag der Anmeldung: 08.05.1991
(73) Patentinhaber: Austria Metall Aktiengesellschaft, A-5282 Braunau am Inn (AT)
(72) Erfinder: Garnweidner, Peter, A-5112 Lamprechtshausen 429a (AT)
(74) Vertreter: Pohlmann, Eckart, Dipl.-Phys.

(56) Entgegenhaltungen:
- EP-A- 0 330 759
- DE-A- 2 409 619
- DE-A- 2 816 318
- FR-A- 2 232 461

## Beschreibung

Die Erfindung betrifft eine Fahrzeugtür für einen Personenkraftwagen, die im geschlossenen Zustand mit einem Teil der zum Wageninnenraum weisenden unteren Seite des Türrahmens an der nach außen weisenden Haut eines Türschwellers anliegt, wobei in der Tür eine sich in Längsrichtung des Wagens erstreckende Strebe zwischen dem Türrahmen und der Türaußenhaut angeordnet ist, die sich in einer etwa normal zur Tür liegende Ebene befindet.

Eine derartige Fahrzeugtür, die aus der FR-A-2232461 bekannt ist, wird in den letzten Jahren bei Personenkraftwagen häufig eingesetzt, da durch die Übereinanderanordnung von Türschweller und Türrahmen ein guter Schutz bei einem seitlichen Aufprall erzielt werden kann und der Türschweller gegenüber kleinen Beschädigungen und vor Schmutz geschützt ist.

Für die Ausführung europäischer PKW's in den Vereinigten Staaten sind üblicherweise Raumschutzträger oder auch Türverstärkungsprofile in den Fahrzeugtüren angeordnet, die horizontal etwa in Stoßstangenhöhe in diesen angeordnet sind. Bei Unfällen, bei denen lediglich Gegenstände unterhalb dieses Verstärkungselementes in die Fahrzeugtür eindringen, ist aber kein Schutz durch diese Verstärkungen gegeben. Den Kollisionskräften wird durch die Türaußenhaut und den Türrahmen lediglich geringer Widerstand entgegengesetzt, wodurch oft der Türschweller mitverformt wird. Es wird kein Verformungswiderstand erzeugt, der die maximale Federsteifigkeit der Tragelemente der Wagenkabine ausnützt. Es kann aber nur durch einen Verformungswiderstand, der die volle Steifigkeit der Wagenkabine ausnützt, ein möglichst großer Schutz für die Insassen erfolgen. Es muß daher zuerst die Tür vollständig verformt werden, wobei ihr Verformungswiderstand über den gesamten Verformungsweg gerade so groß zu sein hat, daß an den Trägern der Kabine keine bleibende Verformung erfolgt.

Bei der FR-A-2232461 sowie auch gemäß DE-A-2409619 sind horizontal in Fahrzeuglängsrichtung in der Tür Verstärkungsträger vorgesehen, die bei Anliegen eines Stoßes, daß heißt im Einsatzfall durchgebogen werden, um die Kräfte, die an den Verstärkungsträgern liegen, letztendlich auf den Türrahmen zu übertragen. Insbesondere ist der gemäß DE-A-2409619 vorgesehene Versteifungsträger eine Strebe, die sich bei Kräften in Fahrzeugslängsrichtung wenig verformen soll, die sich jedoch leicht von horizontal wirkenden Kräften quer zur Längsrichtung des Fahrzeuges verformen insbesondere durchbiegen läßt, um auf diese Weise Energie aufzunehmen.

Die der Erfindung zugrundeliegende Aufgabe besteht demgegenüber darin, eine Fahrzeugtür der Eingangs genannten Art so auszubilden, daß bei einer Kollision im Türbereich ein möglichst hoher Anfangs- widerstand erzielt wird und die Steifigkeit der Fahrgastzelle ausgenützt wird.

Diese Aufgabe wird gemäß der Erfindung dadurch gelöst, daß die Strebe im Anlagebereich der Tür am Türschweller oder an einem daran angebrachten Bauteil vorgesehen ist und aus zwei wellenförmigen Wänden besteht, die mit plattenförmig Abschlüssen versehen sind, wobei die Wellen der beiden Wänden gegenläufig verlaufen.

Die erfindungsgemäße Fahrzeugtür ist leicht zu montieren, wobei auf- grund der Wellenform der Wände der Strebe durch eine entsprechende Gestaltung der einzelnen Wellen die Widerstandskraft über den Deformationsweg der Tür je nach Wunsch ausgelegt werden kann. Durch die Ausführung mit zwei wellenförmigen Wänden wird zusätzlich sichergestellt, daß die Strebe nicht seitlich zur gewünschten Deformationsrichtung ausweicht. Sie verzehrt daher die Kollisionskraft über den gesamten Verformungsweg.

Vorzugsweise ist die Strebe an einer Seite am Türrahmen befestigt, während zwischen der anderen Seite der Strebe und der Türaußenhaut ein Spalt vorhanden ist. Die Strebe kann insbesondere in Längsrichtun des Wagens in der Mitte der Tür angeordnet sein und aus einem Leichtmetall-Strangpreßprofil bestehen.

Diese Bauweise ist besonders wirtschaftlich, da das Leichtmetall-Strangpreßprofil in beliebigen Längen einstückig hergestellt wird und, je nach benötigter Baulänge der Stütze, lediglich abgeschnitten werden muß, die nötigen Löcher für die Schraubenbefestigung gebohrt und sodann in die fertige Türkonstruktion eingesetzt werden kann.

Die Erfindung wird anhand der nachstehenden Zeichnungen dargestellt. Es zeigen:

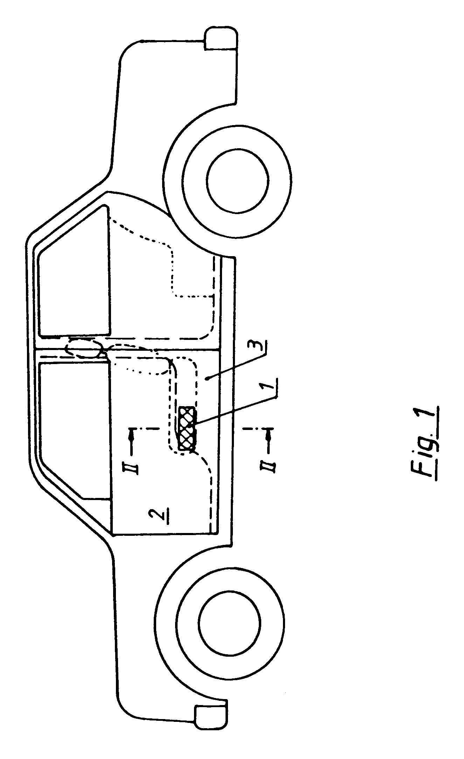

Fig. 1 die prinzipmäßige Anordnung in einer Kraftfahrzeugtür.

Fig. 2 einen vergrößerten Schnitt längs II-II in Fig. 1.

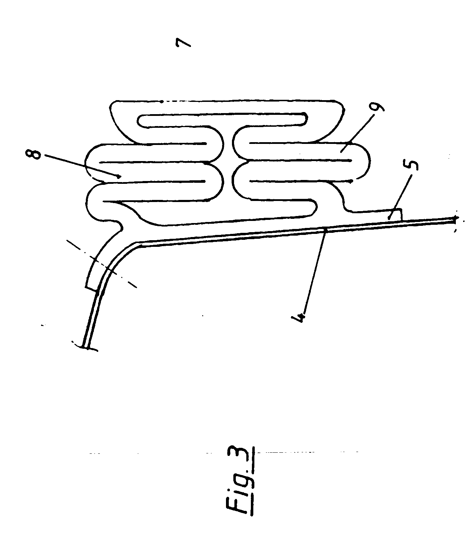

Fig. 3 eine vollständig verformte Strebe.

Die Strebe 1 ist in der Fahrzeugtür 2 seitlich vor dem Schweller 3 liegend angeordnet. Bei der dargestellten Ausführung ist der Schweller 3 in diesem Bereich zusätzlich nach oben hochgezogen. Seine obere Kontur ist durch eine unterbrochene Linie dargestellt. Dadurch ist seine Festigkeit im Kollisionsfall vergrößert und die Bauweise ermöglicht eine besondere einfache Ausführungsform der Strebe 1.

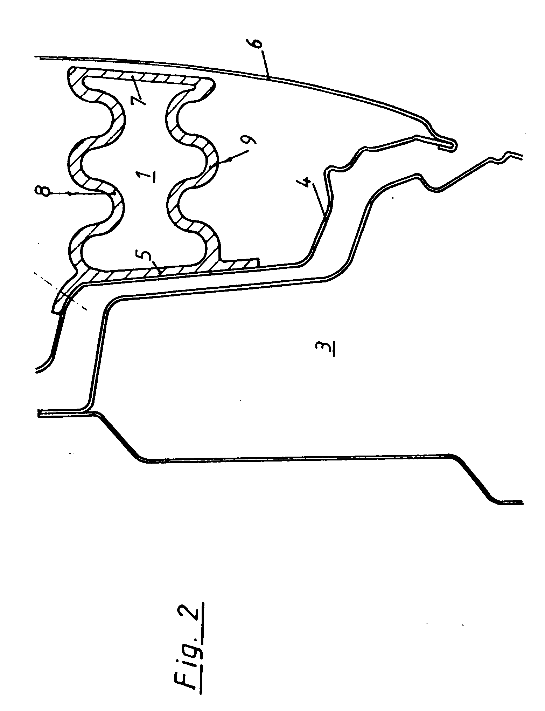

In der Fig. 2 ist die Befestigung am Türrahmen 4 mittels nicht dargestellter Schrauben gezeigt, wobei ein plattenförmiger Abschluß 5 am Türrahmen 4 anliegt, um eine gute Krafteinleitung zu ermöglichen und das Ausreißen des Türrahmens 4 zu verhindern. Zwischen der Außenhaut 6 und dem freistehenden plattenförmigen Abschluß 7 ist geringer Spalt vorhanden, um Klopfgeräusche durch das Schwingen der Tür zu verhindern und einen Wasserabfluß entlang der Innenseite der Türaußenhaut zu ermöglichen. Die beiden Wände 8 und 9 sind wellenförmig gebogen, wobei die Wellen gegeneinander verlaufen und als Einschnürungen an der Strebe 1 wirken. Die Flächen normal zu den beiden Wänden 8, 9 sind unverschlossen. Dadurch wird die Bildung von Kondensat verhindert. Weiters kann die Wand ungehindert einfalten.

## Patentansprüche

1. Fahrzeugtür für einen Personenkraftwagen, die im geschlossenen Zustand mit einem Teil der zum Wageninnenraum weisenden unteren Seite des Türrahmens (4) an der nach außen weisenden Haut eines Türschwellers (3) anliegt, wobei in der Tür eine sich in Längsrichtung des Wagens erstreckende Strebe (1) zwischen dem Türrahmen (4) und der Türaußenhaut (6) angeordnet ist, die sich in einer etwa normal zur Türebene liegenden Ebene befindet, dadurch gekennzeichnet, daß die Strebe (1) im Anlagebereich der Tür am Türschweller (3) oder an einem daran angebrachten Bauteil vorgesehen ist und aus zwei wellenförmigen Wänden (8,9) besteht, die mit plattenförmigen Abschlüssen (5,7) versehen sind, wobei die Wellen der beiden Wände (8,9) gegenläufig verlaufen.

2. Fahrzeugtür nach Anspruch 1 dadurch gekennzeichnet, daß die Strebe (1) an einer Seite am Türrahmen (4) befestigt ist, während zwischen der anderen Seite der Strebe (1) und der Türaußenhaut (6) ein Spalt vorhanden ist.

3. Fahrzeugtür nach Anspruch 1 oder 2 dadurch gekennzeichnet, daß die Strebe (1) in Längsrichtung des Wagens in der Mitte der Tür (2) angeordnet ist.

4. Fahrzeugtür nach einem der vorhergehenden Ansprüche dadurch gekennzeichnet, daß die Strebe (1) aus einem Leichtmetallstrangpressprofil besteht.

## Claims

1. A motor vehicle door for a passenger motor vehicle which in the closed state lies with part of the lower side of the door frame (4) facing the interior of the vehicle against the outwardly-facing skin of a door sill (3), wherein in the door a brace (1) extending in the longitudinal direction of the vehicle is disposed between the door frame (4) and the door outer skin (6) which brace is situated in a plane lying approximately normal to the door plane, characterised in that the brace (1) is provided in the bearing region of the door at the door sill (3) or at a component part attached thereon and consists of two waved-shaped walls (8, 9) which are provided with plate-shaped ends (5, 7), wherein the waves of the two walls (8, 9) extend oppositely orientated to each other.

2. A motor vehicle door according to claim 1, characterised in that the brace (1) is fixed at one side at the door frame (4), while a gap is provided between the other side of the brace (1) and the door outer skin (6).

3. A motor vehicle door according to claim 1 or 2, characterised in that the brace (1) is disposed in the longitudinal direction of the vehicle in the middle of the door (2).

4. A motor vehicle door according to one of the preceding claims, characterised in that the brace (1) consists of a light metal extruded profile.

## Revendications

1. Portière de véhicule pour une voiture automobile, qui, à l'état fermé, s'appuie, par une partie du côté inférieur du châssis de portière (4), dirigée vers l'intérieur de l'habitacle de la voiture, sur le panneau d'un seuil de portière (3), dirigé vers l'extérieur, une entretoise (1) qui s'étend dans la direction longitudinale de la voiture, et se trouve dans un plan sensiblement normal au plan de la portière, étant disposée dans la portière, entre le châssis de portière (4) et le panneau de portière extérieur (6), caractérisée en ce que l'entretoise (1) est prévue dans la zone d'appui de la portière sur le seuil de portière (3), ou sur une pièce qui y est rapportée, et est formée de deux parois ondulées (8, 9) qui sont pourvues d'éléments terminaux de fermeture (5, 7) en forme de plaque, les ondulations de deux parois (8, 9) s'étendant de manière opposée.

2. Portière de véhicule selon la revendication 1, caractérisée en ce que l'entretoise (1) est fixée, d'une côté, sur le châssis de portière (4), tandis qu'entre l'autre côté de l'entretoise (1) et le panneau de portière extérieur (6), existe un interstice.

3. Portière de véhicule selon la revendication 1 ou 2, caractérisée en ce que l'entretoise (1), en se référant à la direction longitudinale de la voiture, est disposée au centre de la portière (2).

4. Portière de véhicule selon l'une des revendications précédentes, caractérisée en ce que l'entretoise (1) est constituée d'un profilé extrudé en alliage léger.
